Europäisches Patentamt

European Patent Office

Office européen des brevets

(11) Veröffentlichungsnummer : **0 103 137 B1**

(12) # EUROPÄISCHE PATENTSCHRIFT

(45) Veröffentlichungstag der Patentschrift :
03.12.86

(51) Int. Cl.⁴ : **H 02 H 11/00**

(21) Anmeldenummer : 83107654.2

(22) Anmeldetag : 03.08.83

(54) **Verfahren und Einrichtung zum schaltfehlergeschützten Betätigen einer aus mehreren Schaltfeldern bestehenden Schaltanlage in einem elektrischen Energieverteilungsnetz.**

(30) Priorität : 16.08.82 DE 3230404

(43) Veröffentlichungstag der Anmeldung :
21.03.84 Patentblatt 84/12

(45) Bekanntmachung des Hinweises auf die Patenterteilung : 03.12.86 Patentblatt 86/49

(84) Benannte Vertragsstaaten :
AT BE CH DE FR GB IT LI LU NL SE

(56) Entgegenhaltungen :
DE-A- 2 607 622
DE-A- 3 026 126
SIEMENS ZEITSCHRIFT, Band 49, Nr. 4, 1975, Seiten 250-253, Erlangen, DE. G. BONIN et al.: "Schaltfehlerschutzgeräte 8TJ2 in Bausteintechnik"

(73) Patentinhaber : Siemens Aktiengesellschaft Berlin und München
Wittelsbacherplatz 2
D-8000 München 2 (DE)

(72) Erfinder : Blau, Heinrich, Dipl.-Ing.
Hohe Warte 1
D-8521 Spardorf (DE)
Erfinder : Grohmann, Werner, Dipl.-Ing.
Finkenweg 5
D-8521 Möhrendorf (DE)
Erfinder : Niebergall, Heribert, Dipl.-Ing.
Friedrich-Bauer-Strasse 1
D-8520 Erlangen (DE)
Erfinder : Görtz, Bernd
Vogelherd 114
D-8520 Erlangen (DE)
Erfinder : Meusel, Wolfgang
Fasanenweg 68
D-8522 Niederndorf (DE)
Erfinder : Waldmann, Hermann, Dr.
Wiesenstrasse 14
D-8521 Weiher (DE)

**Beschreibung**

Die vorliegende Erfindung betrifft ein Verfahren und eine Einrichtung zur Durchführung des Verfahrens zum schaltfehlergeschützten Betätigen einer aus mehreren Schaltfeldern bestehenden Schaltanlage in einem elektrischen Energieverteilungsnetz. Schalthandlungen in diesen Schaltfeldern müssen unter Einhaltung gewisser Sicherheitsbedingungen ausgeführt werden, was der Schaltfehlerschutz gewährleistet, mit dem diese Anlagen üblicherweise ausgestattet sind. Mit dem Schaltfehlerschutz wird durch Verriegeln der betreffenden Schalter die Ausführung einer beabsichtigten Schalthandlung solange blockiert, bis alle Bedingungen für ein gefahrloses Schalten erfüllt sind. So dürfen beispielsweise Trennschalter unter Last nicht geschaltet werden, Erdungsschalter dürfen nur nach Sicherstellung der Spannungsfreiheit des zu erdenden Schaltanlagenteils geschaltet werden und Leistungsschalter dürfen nicht eingeschaltet werden, wenn ein Trennschalter im gleichen Stromkreis in Störstellung steht.

Nach der Zeitschrift Siemens-Energietechnik, 1981, Heft 1, Seiten 20 bis 23 ist es bei elektrischen Schaltfehlerschutzgeräten bekannt, die Schalterverriegelung mittels Kontakten von schalterstellungsabhängig betätigten Hilfsrelais zu bewirken. Die Verdrahtung der Relaiskontakte erfolgt dabei zwischen den einzelnen Geräten desselben Schaltfeldes in einem sogenannten Verriegelungskabelbaum und zwischen Geräten in verschiedenen Schaltfeldern mittels einer Querverkabelung. Insbesondere die Querverkabelung ist relativ aufwendig und jede Erweiterung macht eine Nachverdrahtung zu allen bereits bestehenden Geräten erforderlich, wobei dies auch für rein schaltfeldinterne Erweiterungen gilt. Bei dieser elektromechanischen Ausführung der Verriegelung besteht auch noch die Gefahr, daß Drahtbrüche in der Verkabelung oft unentdeckt bleiben.

Die Erfindung stellt sich die Aufgabe, ein Verfahren und eine Einrichtung zur Durchführung des Verfahrens der eingangs genannten Art anzugeben, welches bzw. welche für die Verriegelung kein Relais, keinen Verriegelungskabelbaum und vor allem keine Querverkabelung benötigt.

Gelöst wird diese Aufgabe erfindungsgemäß durch die im kennzeichnenden Teil der unabhängigen Ansprüche 1 und 8 angegebenen Merkmale.

Die Erfindung samt ihren weiteren Ausgestaltungen, welche in Unteransprüchen gekennzeichnet sind, soll nachstehend anhand der Figuren näher erläutert werden.

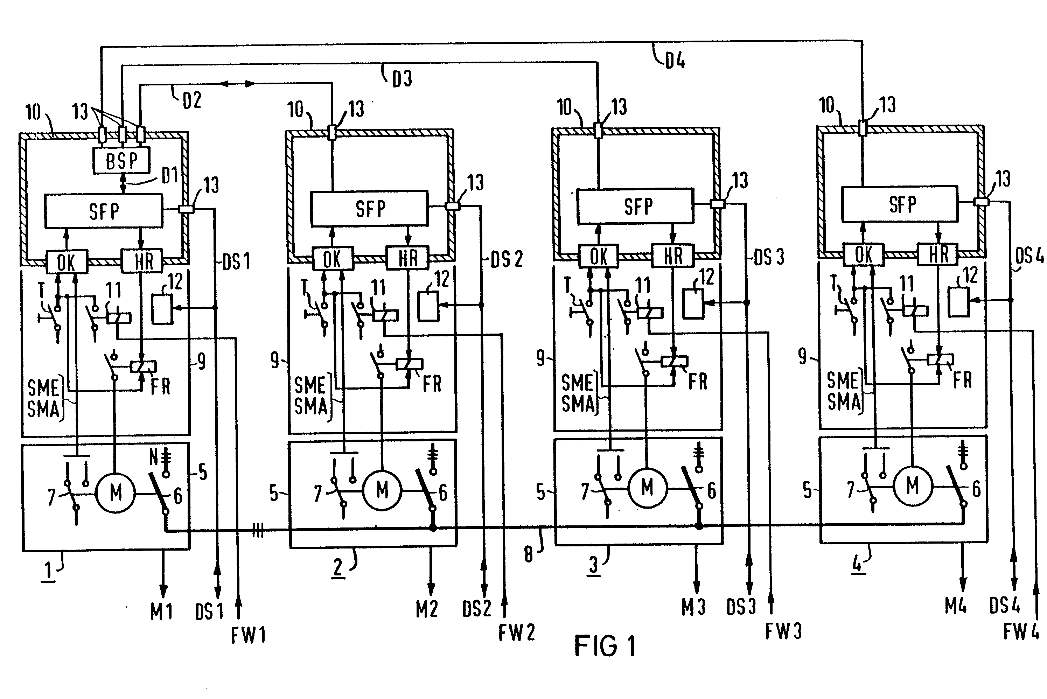

Figur 1 zeigt ein komprimiertes Übersichtsschaltbild einer aus vier Schaltfeldern 1-4 bestehenden Schaltanlage, welche einer nicht dargestellten Station untergeordnet sind. Die Schaltfelder 1-4 sind im Prinzip gleichartig aufgebaut und bestehen aus der Schaltzelle 5, welche Schalter 6 enthält, mit denen Energieverbraucher oder Energieerzeuger mit einem Energieversorgungsnetz verbunden werden können, wobei die mit 6 bezeichneten Schalter in der Regel aus einer Kombination von Trenn-Leistungs- und Erdungsschaltern bestehen. Bei dem in Figur 1 dargestellten Beispiel kuppelt der Schalter 6 im Schaltfeld 1 eine Sammelschiene 8 mit einer anderen Sammelschiene N, während mit den Schaltern 6 der Schaltfelder 2-4 nachgeordnete Verbraucher mit der Sammelschiene 8 elektrisch verbunden werden können. Das Schaltfeld 1 stellt ein sogenanntes Kuppelfeld dar und die Schaltfelder 2-4 werden auch als Abzweige bezeichnet. In den Schaltzellen 5 der einzelnen Schaltfelder, welche, wie angedeutet, örtlich von den übrigen Komponenten der Schaltfelder abgesetzt sein können, sind die Antriebe M für die Schalter 6 sowie mechanisch mit diesen gekuppelte Stellungsmeldeeinrichtungen 7 angeordnet. Weitere Komponenten jedes Schaltfeldes sind eine mit 9 bezeichnete Befehlseingabe/Befehlsausgabe-Einheit und eine dieser zugeordnete elektronische Schaltfehler-Verriegelungseinrichtung 10.

Jede Schaltfehler-Verriegelungseinrichtung 10 enthält einen Prozessor, nachfolgend mit Schaltfeldprozessor SFP bezeichnet. Alle Schaltfeldprozessoren SFP können über Signalleitungen D1-D4 mit einem zentralen, zufällig im Kuppelfeld angeordneten Prozessor, nachfolgend Bildsammelprozessor BSP genannt, kommunizieren. Unter Prozessor wird im Zusammenhang mit der Erfindung ganz allgemein eine Einrichtung verstanden, welche in der Lage ist, auf eine äußere Aufforderung hin eine bestimmte Anzahl von zeitlich aufeinanderfolgenden, informationsverknüpfenden Schritten zu vollziehen und deren Ergebnisse zu speichern. Es kann sich hierbei also um ein Schrittschaltwerk mit zugeordneten digitalen Logik-Schaltkreisen und Speichereinrichtungen, eine frei programmierbare Steuerung oder einen handelsüblichen Mikroprozessor mit zugehörigem Arbeitsspeicher handeln. Der Schaltfeldprozessor SFP bzw. der Bildsammelprozessor BSP befindet sich in einem metallisch gegen elektromagnetische Störeinflüsse abgeschirmten Gehäuse. Den Schaltfeldprozessoren SFP werden über Optokoppler OK Schalthandlungen anfordernde Signale — sogenannte Befehlseingaben — zugeführt und sie geben nach Prüfung der Verriegelungsbedingungen über Haftspeicher, beispielsweise Haftrelais HR Signale — sogenannte Befehlsausgaben — für Freigaberelais FR aus, mit denen dann schließlich die angeforderte Schalthandlung freigegeben, d. h. durchgeführt wird. Den Schaltfeldprozessoren sind weiterhin über Optokoppler Stellungsmeldesignale für die Ein-Stellung (SME) und für die Aus-Stellung (SMA) der Schalter 6 zugeführt. Schaltanforderungssignale können dabei mittels vor Ort, d. h. im Schaltfeld, betätigbarer, jeweils den einzelnen Schaltern 6 zugeordneter Taster T oder mittels jeweils parallel dazu angeordneter Kontakte von Fernwirkrelais 11 eingegeben werden, die mit von der Station ausgesendeten Fernwirksignalen FW1-FW4 betätigbar sind. Wie in Fig. 1 angedeutet, ist zur Betätigung der Spulen der Freigaberelais FR eine konjunktive Verknüpfung zwischen den von den Tastern T bzw. den Kontakten der Fernwirkrelais 11 bewirkten Befehlseingaben und der von den Schaltfeldprozessoren abgegebenen Befehlsausgaben vorgesehen. Damit ist sichergestellt, daß der Schaltfeldprozessor SFP allein keine Schalthandlung bewirken kann, sondern daß es hierzu noch der von ihm nicht beeinflußbaren Betätigung eines weiteren Kontaktes bedarf.

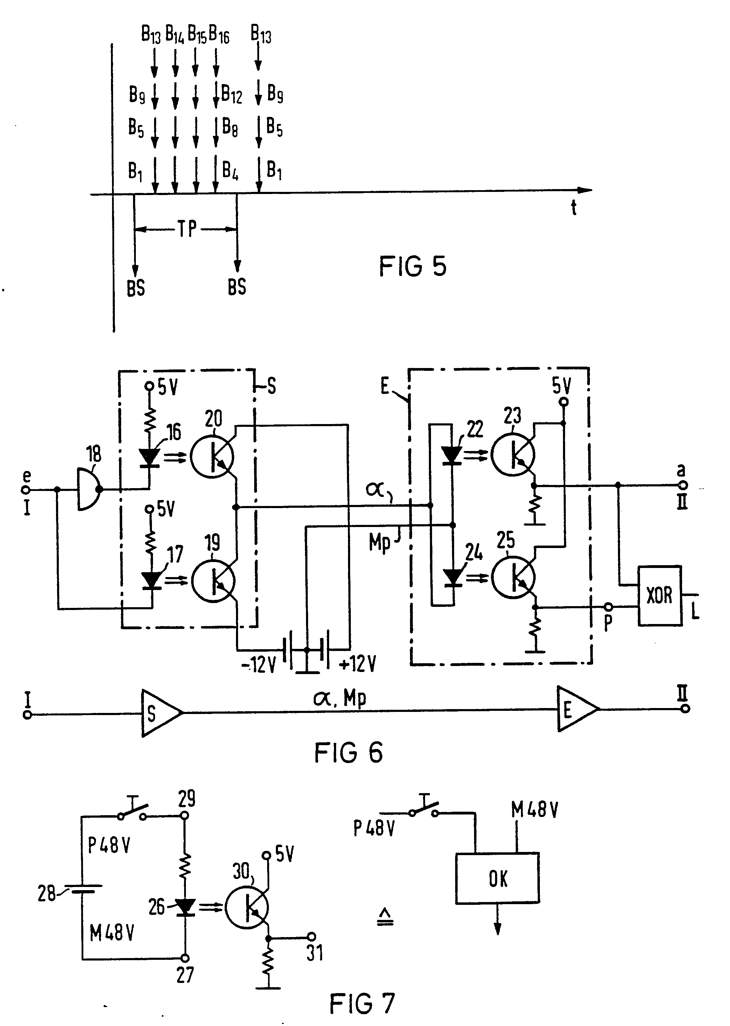

Die den Bildsammelprozessor BSP mit den Schaltfeldprozessoren SFP der einzelnen Schaltfelder verbindenden Signalleitungen können jeweils entweder bidirektional ausgeführt sein oder als zwei unidirektionale Übertragungswege für jede Kommunikationsrichtung. Ein besonders geringer Leistungsaufwand ergibt sich, wenn diese Signalleitungen D2-D4 1-Bit breit sind. Die zu übertragenden Signale von und zu dem Bildsammelprozessor BSP werden dann in an sich bekannter Weise rein seriell in Form von Impulstelegrammen übertragen. Zur Vermeidung von Störeinflüssen ist es weiterhin von Vorteil, die Prozessoren nach außen galvanisch zu entkoppeln, wozu mit 13 bezeichnete optoelektronische Wandler vorgesehen sind. Die Signalleitungen D2-D4 sind entweder als Lichtleiter ausgeführt oder bei zweimaliger optoelektronischer Wandlung an jedem Ende, wie in Figur 6 noch im einzelnen gezeigt, als Drahtverbindung. Zwischen dem Bildsammelprozessor BSP und dem im Schaltfeld 1 angeordneten Schaltfeldprozessor SFP besteht eine weitere, gleichartig betriebene Signalleitung D1, die jedoch keine optoelektronischen Wandler aufweist. Die Schaltfeldprozessoren SFP sind weiterhin noch mit zu der übergeordneten Station führenden Signalleitungen DS1-DS4 verbunden, über welche u. a. Fehlermeldungen gegeben werden können. In jedem Schaltfeld befindet sich ein mit dieser Leitung verbundenes Anzeigegerät 12, auf welchem Fehlermeldungen, das Betriebszustandsbild des eigenen Schaltfeldes oder auch der Schaltanlage sichtbar gemacht werden können. Der Vollständigkeit halber sei noch erwähnt, daß aus den jeweiligen Schaltzellen 5 zur Station führende Meldeleitungen M1-M4 vorgesehen sind, mit denen nach entsprechender, jedoch nicht weiter dargestellter Analog-Digital-Umwandlung die interessierenden Augenblickswerte für den im Schaltfeld auftretenden Strom bzw. die Spannung der Sammelschiene zur Station übertragen werden und dort für übergreifende Aufgaben, wie z. B. den Sammelschienendifferentialschutz, ausgewertet werden können.

Mit den von den Stellungsmeldeeinrichtungen 7 erzeugten, den tatsächlichen Stellungen der Schalter 6 entsprechenden Signalen wird im Speicher jedes Schaltfeldprozessors SFP ein digitales Abbild des Betriebszustandes sämtlicher Schalter seines Schaltfeldes erzeugt. Wird eine Schalthandlung angefordert und zwar entweder durch die Betätigung einer dem entsprechenden Schalter zugeordneten Taste T vor Ort oder ein äquivalent wirkendes Fernwirksignal auf das Fernwirkrelais 11, dann wird diese als solche registriert und bei dem von dem Schaltfeldprozessor erzeugten digitalen Abbild simuliert, d. h. die Schalthandlung als schon begonnen gemeldet.

Der Bildsammelprozessor BSP fordert in regelmäßigen Abständen die Schaltfeldprozessoren SFP der einzelnen Schaltfelder 1-4 zyklisch nacheinander über die Signalleitungen D1-D4 dazu auf, das zuvor von ihnen erstellte aktuelle Abbild des Betriebszustandes der Schalter unter Einschluß eventuell vorliegender Schaltanforderungen (Befehlseingaben) an ihn abzuliefern. Im Bildsammelprozessor BSP werden diese digitalen Einzelbilder der Schaltfelder zu einem digitalen Gesamtbild zusammengesetzt, welches anschließend wieder an die einzelnen Schaltfelder zurückübertragen wird. Die Schaltfeldprozessoren der einzelnen Schaltfelder prüfen anhand des Gesamtbildes die Schaltfehlerschutz-Verriegelungsbedingungen. Ergibt eine solche Verriegelungsprüfung ein negatives Resultat, d. h. erweist sich die angeforderte Schalthandlung als die Schaltfehlerschutz-Sicherheitsregeln nicht verletzend und damit als zulässig, wird vom Schaltfeldprozessor SFP über eines der Haftrelais HR ein entsprechender Befehl zur Betätigung des Freigaberelais FR ausgegeben und damit die Ausführung (Freigabe) der angeforderten Schalthandlung eingeleitet.

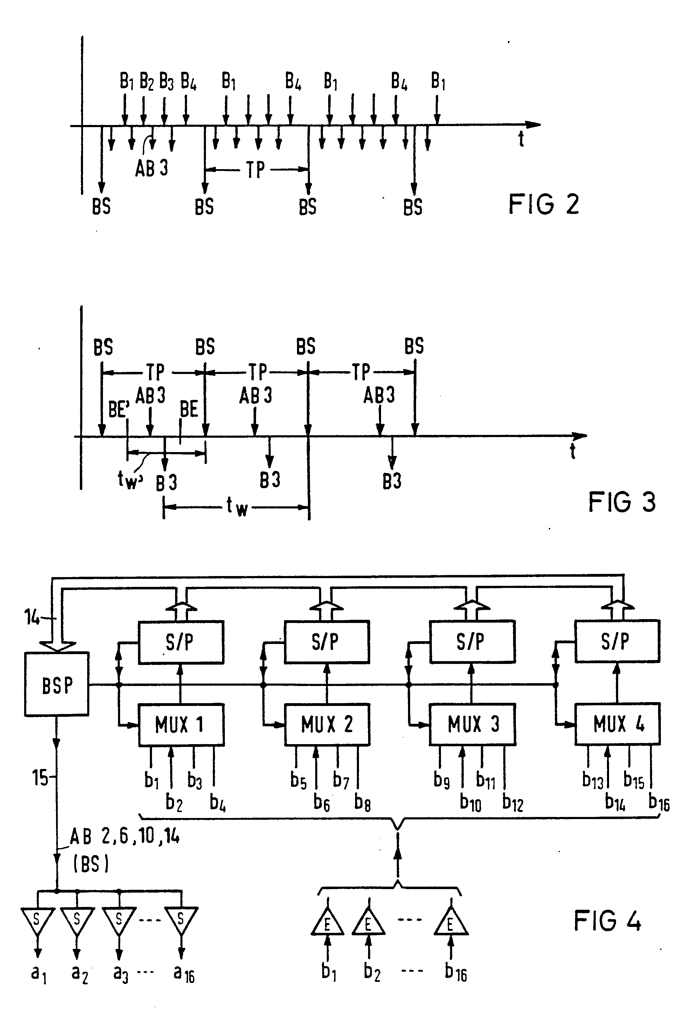

In Figur 2 ist die zeitliche Aufeinanderfolge der Ein- und Ausgangssignale des Bildsammelprozessors BSP dargestellt, wobei auf die Zeitachse t auftreffende Pfeile die zu den einzelnen Zeitpunkten von den Schaltfeldprozessoren SFP in den Schaltfeldern 1-4 gelieferten Impulsdiagramme von Einzelbildern B1-B4 bedeuten sollen und von der Zeitachse t abgehende Pfeile die von dem Bildsammelprozessor ausgehenden Informationen darstellen sollen, welche einerseits im Impulsdiagramm des Gesamtbildes BS der Schaltanlage bestehen, welches in regelmäßiger Zyklusperiode TP an alle Schaltfeldprozessoren gleichzeitig ausgesendet wird, und in den nacheinander ergehenden Aufforderungen an die einzelnen Schaltfeldprozessoren, ihr aktuelles Abbild des Betriebszustandes an den Bildsammelprozessor BSP abzuliefern. In der Figur 2 ist ein derartiges, an den im Schaltfeld 3 befindlichen Schaltfeldprozessor gerichtetes Aufforderungssignal mit AB3 bezeichnet.

Figur 3 zeigt eine entsprechende Darstellung der empfangenen und der abgegebenen Signale am Beispiel des im Schaltfeld 3 angeordneten Schaltfeldprozessors SFP. Aus dieser Darstellung wird deutlich, daß eine nach dem Abliefern des Einzelbildes B3 an den Bildsammelprozessor BSP erfolgte Befehlseingabe BE vom Schaltfeldprozessor zwar simuliert wird, jedoch beim nächsten vom Bildsammelprozessor zusammengestellten Gesamtbild BS noch keine Berücksichtigung finden kann. Dasselbe gilt für entsprechende Befehlseingaben in den übrigen Schaltfeldern. Das Problem, die Ausgabe unzulässiger Kombinationen von Schalthandlungen in verschiedenen Schaltfeldern zu verhindern, kann so gelöst werden, daß die Verriegelungsprüfung nicht jeweils zum Zeitpunkt des nächsten, sondern immer zum Zeitpunkt des übernächsten nach Ablieferung des Einzelbildes eintreffenden Gesamtbildes BS erfolgt. Es würden sich dann bei allen Schaltfeldprozessoren Wartezeiten $t_w$ zwischen der Ablieferung ihres Einzelbildes B3 und der zur Freigabe der angeforderten Schalthandlung erforderlichen Verriegelungsprüfung ergeben, welche größer sind als die von dem Bildsammelprozessor bestimmte Zyklusperiode TP, welche die Zeit ist, die jeweils zwischen zwei aufeinanderfolgend ausgesendeten Gesamtbildern BS vergeht.

Wird jedoch im Schaltfeld in dieser Weise gemäß einer weiteren Ausgestaltung des erfindungsgemäßen Verfahrens nur in den Fällen verfahren, in denen eine Befehlseingabe BE im betreffenden Schaltfeld nach Ablieferung seines Einzelbildes (B3 in Fig. 3) erfolgt, während in den Fällen, wo diese Befehlseingabe (BE′ in Fig. 3) vor Ablieferung des Schaltfeld-Einzelbildes erfolgt, die Verriegelungsprüfung bereits schon anhand des nächstfolgend eintreffenden Gesamtbildes BS durchgeführt wird, dann lassen sich die Wartezeiten im Mittel erheblich verkürzen.

Eine weitere Reduzierung der für den Informationsaustausch zwischen den Schaltfeldprozessoren und dem Bildsammelprozessor benötigten Zeit läßt sich mit einer weiteren Modifikation des erfindungsgemäßen Verfahrens erreichen. Diese besteht darin, daß in den einzelnen Zyklusperioden TP zwischen dem Bildsammelprozessor BSP und den Schaltfeldprozessoren SFP nur die Veränderungen der digitalen Abbilder, also Schalterstellungsänderungen und Befehlseingaben, gegebenenfalls auch noch eine Information, daß sich im Schaltfeld nichts geändert hat, übertragen werden. Die entsprechenden, zu übertragenden Impulsdiagramme werden dann wesentlich kürzer als bei der Übertragung des vollständigen Einzelbildes bzw. des vollständigen Gesamtbildes. Dies wirkt sich dann in einer merklichen zeitlichen Verkürzung der Dauer der Zyklusperioden TP aus, selbst wenn aus Sicherheitsgründen noch Quittierungsschritte vorgesehen werden, welche darin bestehen können, daß jeder Schaltfeldprozessor unmittelbar nach Empfang einer Information dieselbe an den Bildsammelprozessor zum Vergleich zurücksendet. Ebenfalls aus Sicherheitsgründen ist es zweckmäßig von Zeit zu Zeit, beispielsweise jeweils nach 100 oder 1 000 Zyklusperioden TP einmal die vollständigen Bilder zwischen dem Bildsammelprozessor und den einzelnen Schaltfeldprozessoren zu übertragen.

Es ist zweckmäßig, die beabsichtigte Schalthandlung gar nicht erst zu simulieren, wenn aufgrund des zuletzt empfangenen Gesamtbildes bereits vom jeweiligen Schaltprozessor erkannt wird, daß sie die Sicherheitsregeln verletzen würde. Daher wird unmittelbar nach dem Auftreten einer Schaltanforderung eine Vorab-Verriegelungsprüfung mit dem zuletzt empfangenen und im Schaltfeldprozessor gespeicherten Gesamtbild BS durchgeführt und bei positivem Ergebnis die Simulation der Schalthandlung unterdrückt, so daß diese in dem später gesendeten Gesamtbild nicht erscheint.

Figur 4 zeigt eine Ausgestaltung des erfindungsgemäßen Verfahrens, mit dem sich der Zeitaufwand für den gegenseitigen Informationsaustausch zwischen den einzelnen Schaltfeldprozessoren SFP und dem Bildsammelprozessor BSP nochmals reduzieren läßt. Von ihr kann immer Gebrauch gemacht werden, wenn die Eingabeinformationen vom Bildsammelprozessor BSP schneller verarbeitet als auf den Signalleitungen übertragen werden können. In Figur 4 ist der Bildsammelprozessor BSP über einen Datenbus 14 mit vier Serien/Parallelwandlern S/P verbunden, welche eingangsseitig über je einen Multiplexer MUX1-MUX4 von jeweils einer der mit b1-b16 bezeichneten Empfangsleitungen mit seriellen Informationen in Form von Impulstelegrammen B1-B16 beschickt werden. Serien/Parallelwandler sind unter den Bezeichnungen Zilog Z80, SIO, Motorola 6850 (ACIA) oder Intel 8251 (USART) bekannte, handelsüblich erhältliche Schnittstellenbausteine, welche dazu dienen, serielle, d. h. 1-Bit breite Informationen in mehr-Bit breite umzuwandeln, d. h. zu sogenannten Bytes aufzubereiten und dann auf einmal, parallel, an den Datenbus zu übertragen. Beim dargestellten Beispiel sei angenommen, daß der mit 14 bezeichnete Datenbus 8-Bit breit ist, die Serien/Parallelwandler S/P sammeln also jeweils 8 aufeinanderfolgende Bits eines Impulstelegramms, geben dann eine entsprechende Meldung an den Bildsammelprozessor BSP und werden von ihm über den Datenbus 14 entsorgt, so daß sie anschließend wieder zum Sammeln der nächstfolgenden 8 Bits bereit sein. Die ebenfalls vom Bildsammelprozessor BSP gesteuerten Mutliplexer MUX1-MUX4 schalten jeweils eines ihrer vier Eingangssignale auf den Eingang des ihnen zugeordneten Serien/Parallelwandlers durch, beim dargestellten Beispiel wären es im betrachteten Zeitaugenblick die Impulstelegramme B2, B6, B10 und B14, welche die Einzelbilder der entsprechenden Schaltfelder 2, 6, 10 und 14 beinhalten. Die Abgabe von Einzelbildern wird vom Bildsammelprozessor BSP durch Aussenden von Aufforderungssignalen AB2, AB6, AB10 und AB14 über die Leitung 15 und mit S bezeichneten Sendegliedern veranlaßt, welche die zu den einzelnen Schaltfeldern 1-16 führenden Leitungen a1-a16 beaufschlagen. Auf dieser Leitung 15 erscheint dann auch das vom Bildsammelprozessor zusammengestellte Gesamtbild BS, welches über diese Sendeglieder gleichzeitig an alle Schaltfeldprozessoren gesendet wird. Sind die den Einzelbildern der Schaltfelder 2, 6, 10 und 14 entsprechenden Impulstelegramme B2, B6, B10 und B14 abgearbeitet, dann werden vom Bildsammelprozessor BSP die Multiplexer MUX1-MUX4 so umgesteuert, daß nunmehr andere Multiplexereingänge, beispielsweise die mit den Signalen B3, B7, B11 und B15 beschickten, mit den zugeordneten Serien/Parallelwandlern verbunden werden und der Bildsammelprozessor BSP gibt dann die Aufforderungssignale AB3, AB7, AB11 und AB15 zur Abgabe eines Einzelbildes an die entsprechenden Schaltfeldprozessoren in den Schaltfeldern 3, 7, 11 und 15. Jeder Schaltfeldprozessor erhält eine besondere Adreßkennung in Form eines zweckmäßigerweise zu Beginn eines Impulstelegramms gesendeten bestimmten Bitmusters, mit welcher er und nur er auf das für ihn bestimmte Aufforderungssignal reagiert.

Aus Figur 5, welche nach Art von Figur 2 das zeitliche Geschehen beim Bildsammelprozessor BSP wiederspiegelt, wird deutlich, daß durch die Vervierfachung der gleichzeitig aktiven Empfangseinrichtungen bei gleicher Zyklusperiode TP des Bildsammelprozessors die Zahl der verarbeitbaren Einzelbilder vervierfacht bzw. bei gleicher Einzelbildzahl die Zyklusperiode TP entsprechend vermindert werden kann.

Figur 6 zeigt Sinnbild und eine mögliche Ausführungsform für einen 1-Bit breiten Übertragungsweg, welcher an seinen Enden I und II mit einem Sendeglied S bzw. einem Empfangsglied E abgeschlossen ist und in der Anordnung entsprechend Figur 1 den Bildsammelspeicher BSP jeweils mit einem Schaltfeldprozessor SFP in den Schaltfeldern 2-4 verbindet. Es handelt sich hier um einen unidirektionalen Übertragungsweg, weshalb für die Übertragung einer Information vom Ende II zum Ende I ein gleichartiger Übertragungsweg antiparallel anzuordnen ist. Jeweils ein solches Paar antiparallel angeordneter unidirektionaler Übertragungswege entspricht daher einer der in Figur 1 mit D2-D4 dargestellten Signalleitungen. Gemäß dem oberen Teil der Figur 6 erfolgt die Realisierung des unidirektionalen Übertragungsweges mittels einer Zweidrahtleitung. Die mit e bezeichnete Klemme werde beispielsweise vom Ausgangssignal des Bildsammelprozessors BSP beaufschlagt, wobei ein Potential von 5 Volt einem logischen L-Signal entsprechen möge und einem logischen Null-Signal das Potential von 0 Volt. In dem mit S bezeichneten Sendebaustein sind zwei Fotodioden 16 und 17 anodenseitig an eine Spannungsquelle von 5 Volt angeschlossen. Die Klemme e ist direkt an die Kathode der Fotodiode 17 angeschlossen und über einen Inverter 18 mit der Kathode der Fotodiode 16 verbunden. Beträgt das Potential an der Klemme e Null Volt, dann ist die Fotodiode 17 durchlässig und das von ihr ausgesendete Licht steuert einen ihr zugeordneten Fototransistor 19 durchlässig, so daß die mit α bezeichnete Leitung des Übertragungsweges an das von einer Batterie gelieferte Potential von −12 Volt gelegt wird. Für den Fall, daß an der Klemme e ein L-Signal anliegt, d. h. die Klemme e das Potential von 5 Volt aufweist, ist die Fotodiode 17 nicht stromdurchlässig, der Transistor 19 ist gesperrt, während der Ausgang des Inverters 8 nunmehr das Potential 0 Volt aufweist und damit die Fotodiode 16 stromdurchflossen ist. Ihr Licht schaltet den Fototransistor 20 durch, womit die Leitung an +12 Volt gelegt wird. Von den Fototransistoren 19 und 20 ist also immer einer gesperrt und der andere durchlässig, wobei das Potential der Leitung +12 Volt beträgt bei einem L-Signal an der Klemme e und −12 Volt aufweist, wenn das Signal an der Klemme e ein logisches O-Signal ist.

Die Wirkungsweise des am Ende der Übertragungsleitung angeordneten Empfangsbausteine E ist ganz analog. Weist die Leitung das positive Potential von +12 Volt auf, dann wird eine Fotodiode 22 durchlässig, deren Licht einen zugeordneten Fototransistor 23 durchschaltet, so daß an der Ausgangsklemme a ein L-Signal (≙ 5 Volt) erscheint, während für den Fall, daß die Leitung das Potential von −12 Volt aufweist, die Fotodiode 24 und damit der ihr zugeordnete Fototransistor 25 stromdurchflossen sind, so daß an der Ausgangsklemme a ein logisches Null-Signal (≙ 0 Volt) erscheint. Von den beiden Fototransistoren 23 und 25 ist also ebenfalls stets der eine gesperrt und der andere durchlässig und umgekehrt, d. h. die Logiksignale an den Klemmen a und p sind bei intaktem Übertragungsweg empfängerseitig stets verschieden. Dies läßt sich relativ einfach durch ein eingangsseitig mit den Klemmen a und p verbundenes exklusives ODER-Gatter XOR überwachen, an dessen Ausgang bei einwandfreiem Übertragungsweg ein Dauer-L-Signal anstehen muß, während das Logiksignal an der Klemme a dem an der Klemme e ausgesendeten Logiksignal folgt. Für den Fall, daß eine gemeinsame Masse bzw. Erde vorhanden ist, an die der Verbindungspunkt zwischen den Fotodioden 22 und 24 anschließbar ist, könnte bei geerdeter Batterie auf die Rückleitung MP verzichtet werden.

Der linke Teil der Figur 7 zeigt ein Ausführungsbeispiel für die Innenschaltung eines im rechten Teil der Fig. 7 symbolisch dargestellten Optokopplers OK, welcher zur galvanischen Entkopplung und Pegelanpassung der in der Befehlseingabe/Befehlsausgabe-Einheit 9 erzeugten Eingangssignalen für den Schaltfeldprozessor SFP verwendet werden kann. Die Kathode einer Fotodiode 26 ist mit der Klemme 27 verbunden, welche am mit M 48 Volt bezeichneten negativen Pol einer Stromversorgungsbatterie 28 angeschlossen ist. Wird beispielsweise durch Betätigung eines Tasters eine zweite Eingangsklemme 29 an den mit P 48 Volt bezeichneten positiven Pol dieser Batterie gelegt, dann wird die Fotodiode 26 stromdurchflossen und das von ihr ausgesendete Licht schaltet einen Fototransistor 30 durchlässig, so daß die Ausgangsklemme 31 das Potential von 5 Volt aufweist, welches einem logischen L-Signal entspricht. Bei unbetätigtem Taster sind dagegen weder Fotodiode 26 noch Fototransistor 30 stromdurchflossen, so daß an der Ausgangsklemme 31 das einer logischen 0 entsprechenden Potential von 0 Volt ansteht.

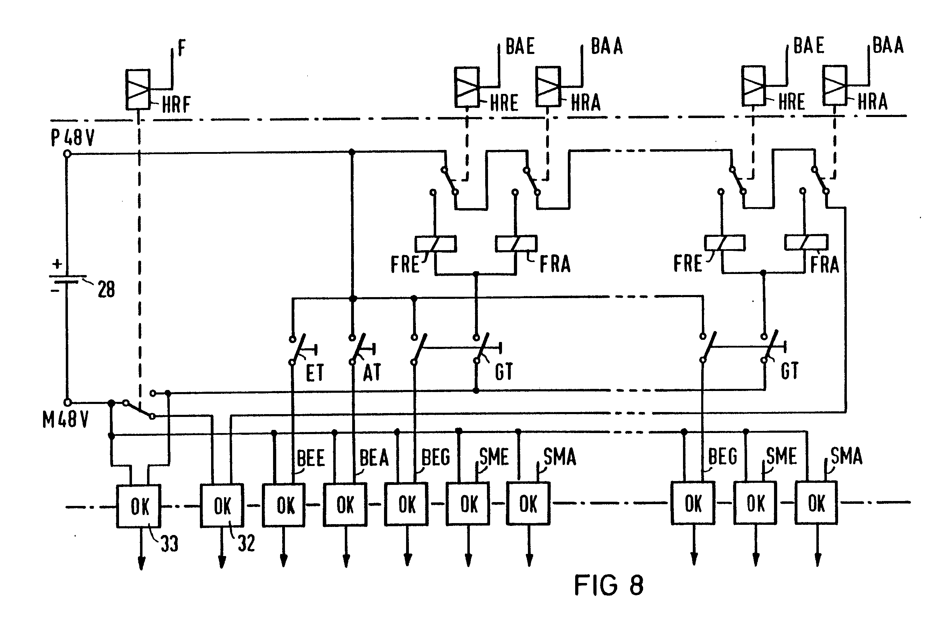

Figur 8 zeigt im Detail die Befehlseingabe/Be-

fehlsausgabeeinheit 9 eines Schaltfeldes. In diesem Schaltfeld sei eine nicht näher bestimmte Anzahl von Hochspannungsschaltern 6, wie Leistungsschalter, Trennschalter und Erdungsschalter vorhanden. Für zwei solcher Schalter sind deren Freigaberelais FRE und FRA dargestellt. Jedem Hochspannungsschalter ist ein Freigaberelais FRA zugeordnet, bei dessen Betätigung ein Motorantrieb ihn in die Aus-Stellung bringt, sowie ein Freigaberelais FRE zugeordnet, bei dessen Betätigung der Hochspannungsschalter entsprechend in seine Ein-Stellung gebracht wird. Jedem Hochspannungsschalter weiterhin zugeordnet sind zwei Optokoppler OK, welche mit den Stellungsmeldesignalen SME bzw. SMA für seine Ein- bzw. Aus-Stellung beaufschlagt werden, ein Geräteanwahltaster GT samt einem bei dessen Betätigung mit dem Signal BEG aktivierten Optokoppler OK zur Identifizierung des angewählten Schalters, sowie zwei vom Schaltfeldprozessor SFP mit den Befehlsausgabesignalen BAE und BAA beaufschlagbare Haftrelais HRE und HRA, mit denen Kontakte in den Stromkreisen der Spulen der Freigaberelais FRE bzw. FRA geschlossen werden können. Allen Hochspannungsschaltern gemeinsam zugeordnet sind ein mit ET und ein mit AT bezeichneter Taster samt jeweils zugeordneten Optokopplern. Mit den bei Betätigung dieser Taster auftretenden Befehlseingabesignalen BEE bzw. BEA wird festgelegt, ob der gerade durch Betätigung seines Gerätetasters GT angewählte Schalter in seine Ein- oder in die Aus-Stellung zu bringen ist. Eine Befehlseingabe, d. h. die an den Schaltfeldprozessor gerichtete Anforderung einer beabsichtigten Schalthandlung besteht also stets im Betätigen der Gerätetaste GT des entsprechenden Schalters und einer der Tasten ET bzw. AT.

Allen Schaltern gemeinsam zugeordnet ist noch ein ebenfalls vom Schaltfeldprozessor mit dem Signal F beaufschlagbares Haftrelais HRF zur endgültigen Freigabe, d. h. zur Ausführung der angeforderten Schalthandlung. Als Spannungsquelle für die Erregung der Freigaberelais FRE und FRA sowie für die eingangsseitige Beaufschlagung der Optokoppler OK dient die Batterie 28 mit einer Spannung von beispielsweise 48 Volt.

Die Haftrelais werden von Signalen des Schaltfeldprozessors betätigt, welche, wie schon im Zusammenhang mit Figur 6 erwähnt, einen Hub von 5 Volt aufweisen können. Ein Haftrelais hat jeweils eine Spule für jede der beiden Endlagen seines Ankers und dieser und damit der von ihm betätigte Kontakt verharrt in der Endlage, welche der zuletzt erregten Spule zugeordnet ist. Die Haftrelais brauchen daher für eine dauernde Kontaktgabe nicht mit entsprechend langen Dauersignalen beaufschlagt werden und bringen im Zusammenhang mit der Erfindung noch den Vorteil, daß bei Stromausfall sich am Betriebszustand des Schaltfeldes nichts ändern kann. Die Kontakte der in Fig. 8 dargestellten Haftrelais werden mit den ihnen zugeordneten Schaltfeldprozessorsignalen F, BAE bzw. BAA jeweils in ihre andere, nicht dargestellte Lage umgeschaltet und nach ausgeführtem Befehl, was durch Überwachung des entsprechenden Stellungsmeldesignals SME bzw. SMA erfolgen kann, werden sie durch eine Erregung der Rückstellspule wieder in die gezeichnete Stellung gebracht.

Jedem der in Figur 8 dargestellten Taster kann noch ein parallel wirkender Kontakt eines Relais zugeordnet werden, welches von einem von der Station kommenden Fernwirksignal erregt wird, wobei zweckmäßigerweise noch entsprechend zusätzliche Optokoppler vorgesehen werden können. Damit können in der Station dieselben Schalthandlungen eingeleitet werden, wie sie im Schaltfeld vor Ort mit dem in Figur 8 dargestellten Tastern möglich sind. Die Kontakte sämtlicher Haftrelais sind in Reihe geschaltet und bilden für den Fall, daß — wie in Figur 8 dargestellt — keine Befehlseingabe, d. h. keine Schaltanforderung vorliegt, mit dem Eingangskreis eines Optokopplers 32 einen geschlossenen Stromkreis. Das Ausgangssignal dieses Optokopplers ist dann ein L-Signal und kann vom Schaltfeldprozessor zur Haftrelaisüberwachung verwendet werden.

Soll irgendein Hochspannungsschalter betätigt werden, so laufen Befehlseingabe, Befehlsausgabe und Freigabe stets nach folgendem Schema ab : Durch Betätigen einer der Tasten ET bzw. AT und der dem zu betätigenden Schalter zugeordneten Gerätetaster GT erscheinen an den Ausgängen der zugeordneten Optokoppler L-Signale, womit Ort und Art der beabsichtigten Schalthandlung vom Schaltfeldprozessor erkannt werden. Dieser führt dann mit dem zuletzt empfangenen Gesamtbild BS eine erste Verriegelungsprüfung (Vorab- Verriegelungsprüfung) durch und gibt bei negativem Ergebnis, d. h. bei Zulässigkeit der angeforderten Schalthandlung auf das entsprechende Haftrelais HRE bzw. HRA des angewählten Schalters ein Signal, welches seinen zugeordneten Befehlsausgabekontakt betätigt und eine Erregung des entsprechenden Freigaberelais FRE bzw. FRA vorbereitet. Da im Spulenstromkreis dieses Relais immer auch noch die Geräteanwahltaste GT liegt, wird auf einfache Weise sichergestellt, daß der Schaltfeldprozessor allein keine Erregung eines Freigaberelais bewirken kann. Nachdem der Befehlsausgabekontakt des entsprechenden Haftrelais HRE bzw. HRA geschlossen ist, d. h. das eine Ende der Spule des Freigaberelais an den positiven Pol P 48 Volt der Batterie gelegt wurde, tritt dieses Potential auch am Eingang des Optokopplers 33 auf, womit an dessen Ausgang ein vom Schaltfeldprozessor auswertbares L-Signal erscheint zum Zeichen, daß vom Schaltfeldprozessor der richtige Befehlsausgabekontakt geschlossen ist, d. h. das richtige Haftrelais erregt wurde und daß im Spulenstromkreis des zugeordneten Freigaberelais FRE bzw. FRA keine Störung vorliegt. Danach wird vom Schaltfeldprozessor das nächste bzw. das übernächste, vom Bildsammelprozessor gesendete Gesamtbild BS abgewartet, eine zweite Verriegelungsprüfung durchgeführt und bei deren negativem Ergebnis das Haftrelais HRF betätigt, womit dann der Spulenstromkreis des angewählten Freigaberelais FRE bzw. FRA geschlossen und die angeforderte Schalthandlung ausgeführt wird.

Insgesamt gesehen kann mit der Erfindung ein sehr hohes Maß an Betriebssicherheit mit relativ geringem Aufwand beim Betrieb von Hochspannungsschaltanlagen erreicht werden.

**Patentansprüche**

1. Verfahren zum schaltfehlergeschützten Betätigen einer aus mehreren Schaltfeldern (1-4) bestehenden Schaltanlage in einem elektrischen Energieverteilungsnetz, gekennzeichnet durch folgende Schritte :

a) In jedem Schaltfeld (1-4) wird mit den Stellungsmeldesignalen (SME, SMA) seiner Schalter (6) ein digitales Abbild (B1-B4) seines Betriebszustandes unter Simulation einer angeforderten Schalthandlung erzeugt ;

b) die digitalen Abbilder (B1-B4) der einzelnen Schaltfelder (1-4) werden fortlaufend nacheinander zyklisch abgefragt, zu einem zentralen Sammelspeicher übertragen und dort zu einem Gesamtbild (BS) zusammengefügt, welches anschließend wieder zu jedem Schaltfeld übertragen und dort bis zum Eintreffen des nächsten Gesamtbildes gespeichert wird ;

c) bei Anforderung einer Schalthandlung (Befehlseingabe BE) wird in dem betreffenden Schaltfeld anhand eines darauffolgend eintreffenden Gesamtbildes (BS) auf Schaltfehlerschutz-Verriegelungsbedingungen geprüft (Verriegelungsprüfung) und bei negativem Ergebnis die angeforderte Schalthandlung ausgeführt (Freigabe).

2. Verfahren nach Anspruch 1, dadurch gekennzeichnet, daß in Abänderung von Schritt b) zwischen den Schaltfeldern (1-4) und dem zentralen Sammelspeicher nacheinander zyklisch nur die Veränderungen der digitalen Abbilder übertragen werden und in mehrere Zyklusperioden (TP) umfassenden Intervallen jeweils Schritt b) unverändert durchgeführt wird.

3. Verfahren nach Anspruch 1 oder 2, dadurch gekennzeichnet, daß bei einer vor der Abfrage des Schaltfeld-Einzelbildes erfolgten Befehlseingabe (BE) die Verriegelungsprüfung anhand des nächsten darauffolgend eintreffenden Gesamtbildes (BS) und bei einer nach der Abfrage des Schaltfeld-Einzelbildes erfolgten Befehlseingabe (BE) die Verriegelungsprüfung anhand des zweiten darauffolgend eintreffenden Gesamtbildes (BS) vorgenommen wird.

4. Verfahren nach einem der Ansprüche 1 bis 3, dadurch gekennzeichnet, daß bei Schritt a) unmittelbar schon nach der Anforderung einer Schalthandlung im Schaltfeld eine Vorab-Verriegelungsprüfung anhand des zuvor empfangenen Gesamtbildes durchgeführt und bei positivem Ergebnis die Simulation der angeforderten Schalthandlung unterdrückt wird.

5. Verfahren nach einem der Ansprüche 1 bis 4,

dadurch gekennzeichnet, daß die Übertragung der digitalen Bilder auf 1-Bit breiten, sternförmig vom Sammelspeicher zu allen Schaltfeldern führenden Signalleitungen (D1-D4) seriell erfolgt.

6. Verfahren nach Anspruch 5, dadurch gekennzeichnet, daß eine Übertragung von m Schaltfeldabbildern auf m 1-Bit breiten Signalleitungen zu m Zwischenspeichern (S/P) gleichzeitig vorgenommen und von dort auf einem n-Bit breiten Bus (14) an den Sammelspeicher weitergegeben wird.

7. Verfahren nach einem der Ansprüche 1 bis 6, dadurch gekennzeichnet, daß vor Freigabe einer Schalthandlung eine Durchgangsprüfung des jeweils für die angeforderte Schalthandlung vorgesehenen Schalterbetätigungs-Stromkreises erfolgt.

8. Einrichtung zur Durchführung des Verfahrens nach einem der Ansprüche 1 bis 7, gekennzeichnet durch folgende Merkmale :

a) In jedem Schaltfeld (1-4) ist ein Schaltfeldprozessor (SFP) vorgesehen, welcher über eine bidirektionale oder zwei unidirektionale Signalleitungen (01-04) mit einem zentralen Bildsammelprozessor (BSP) verbunden ist ;

b) den Schaltfeldprozessoren (SFP) sind Stellungsmeldesignale (SME, SMA) sowie Schaltanforderungssignale (BEE, BEA, BEG) zugeführt ;

c) von Schaltfeldprozessoren (SFP) ausgegebene Schaltbefehle (BAE, BAA) werden zur Freigabe konjunktiv mit den zugehörigen Schaltanforderungssignalen verknüpft.

9. Einrichtung nach Anspruch 8, dadurch gekennzeichnet, daß die von und zu den Prozessoren führenden Signalübertragungswege galvanisch unterbrochen sind.

10. Einrichtung nach Anspruch 9, dadurch gekennzeichnet, daß die Stellungsmeldesignale und die Schaltanforderungssignale den Schaltfeldprozessoren über Optokoppler (OK) zugeführt sind und mit den Ausgangssignalen der Schaltfeldprozessoren Haftrelais (HR) betätigbar sind.

11. Einrichtung nach Anspruch 10, dadurch gekennzeichnet, daß jeweils die Spulen zweier entgegengesetzte Schalthandlungen bei einem Schalter auslösender Relais (FRE, FRA) mit ihren einen Enden gemeinsam über den Kontakt eines Schalteranwahlgerätes (GT) und den Kontakt eines ersten, die Freigabe auslösenden Haftrelais (HRF) mit dem einen Pol einer Spannungsquelle (28) und jeweils an ihrem anderen Ende über einen Kontakt eines zweiten bzw. eines dritten Haftrelais (HRE, HRA) mit dem anderen Pol dieser Spannungsquelle (28) verbunden sind und ein Optokoppler (33) eingangsseitig parallel zu dem Kontakt des ersten Haftrelais (HRF) geschaltet ist.

12. Einrichtung nach Anspruch 10 oder 11, dadurch gekennzeichnet, daß die Kontakte aller Haftrelais als Wechselkontakte ausgebildet sind und im unbetätigten Zustand der Haftrelais in einem über einen Optokoppler (32) geschlossenen Stromkreis angeordnet sind.

13. Einrichtung nach einem der Ansprüche 8 bis 12, dadurch gekennzeichnet, daß die Schaltfeldprozessoren (SFP) und der zentrale Bildsammelprozessor (BSP) von einer metallischen Abschirmung umgeben sind.

## Claims

1. A method for providing commutation fault protection when operating a commutation installation composed of a plurality of commutation fields (1-4) in an electric energy distribution network, characterised by the following steps :

a) in each commutation field (1-4) a digital representation (B1-B4) of its operating state is produced by means of the position-indicating signals (SME, SMA) of its commutators (6) whilst simulating a requested commutation action ;

b) the digital representations (B1-B4) of the individual commutation fields (1-4) are continuously interrogated sequentially in a cycle transferred to a central collective store and assembled to form an overall representation (BS) which is subsequently re-transferred to each commutation field and stored until the next overall representation is received :

c) when a commutation action (instruction input BE) is requested commutation fault protection locking conditions are checked (locking check) in the respective commutation field by means of a subsequently incoming overall representation (BS) and in the event of a negative result the requested commutation action is carried out (release).

2. A method as claimed in Claim 1, characterised in that as a modification of step b) only the changes of the digital representations are cyclically transmitted between the commutation fields (1-4) and the central collective store and step b) is respectively carried out in intervals comprising a plurality of cycle periods (TP).

3. A method as claimed in Claim 1 or 2, characterised in that in the case of an instruction input (BE) effected prior to the interrogation of the individual representation of the commutation field, the locking check is carried out by means of the next consecutively incoming overall representation (BS) and in the case of an instruction input (BE) effected after the interrogation of the individual image of the commutation field the locking check is carried out by means of the second consecutively incoming overall representation (BS).

4. A method as claimed in one of Claims 1 to 3, characterised in that in step a) a preliminary locking check by means of the previously received overall representation is directly carried out after the request of a commutation action and in the case of a positive result the simulation of the requested commutation action is suppressed.

5. A method as claimed in one of Claims 1 to 4, characterised in that the transmission of the digital representations is effected serially on signal lines (D1-D4) which are 1-bit wide and lead radially from the collective store to all commutation fields.

6. A method as claimed in Claim 5, characterised in that a transmission of m commutation field representations on m signal lines, which are 1-bit wide, to m intermediate stores (S/P), is simultaneously carried out and transferred from there to the collective store on an n-bit wide bus (14).

7. A method as claimed in one of Claims 1 to 6, characterised in that prior to the release of a commutation action a continuity check of the circuit for the switch actuation respectively provided for the requested commutation action is carried out.

8. A device for the implementation of the method as claimed in one of Claims 1 to 7, characterised by the following features :

a) in each commutation field (1-4) a commutation field processor (SFP) directed to a central collective representation store (BSP) by means of a bidirectional or two unidirectional signal lines (D1-D4) is arranged ;

b) position-indicating signals (SME, SMA) and commutation request signals (BEE, BEA) are fed to the commutation field processors (SFP) ;

c) commutation instructions (BAE, BAA) transmitted by the commutation field processors (SFP) are conjunctively connected to the assigned commutation request signals for the release.

9. A device as claimed in Claim 8, characterised in that the signal transmission paths leading to and from the processors are d. c. isolated.

10. A device as claimed in Claim 9, characterised in that the position-indicating signals and the commutation request signals are fed to the commutation field processors by means of opto-couplers (OK) and holding relays (HR) can be operated by means of the output signals of the commutation field processors.

11. A device as claimed in Claim 10, characterised in that the coils of two opposite commutation actions in a relay (FRE, FRA) which triggers a commutator each have one end commonly connected to the one pole of a voltage source (28) by the contact of a commutator selection apparatus (GT) and the contact of a first holding relay (HRF) which triggers the release, and each have their other end connected to the other pole of said voltage source (28) by means of a contact of a second or a third holding relay (HRE, HRA), and at the input end an opto-coupler (33) is switched parallel to the contact of the first holding relay (HRF).

12. A device as claimed in Claim 10 or 11, characterised in that the contacts of all holding relays are designed as alternating contacts and in the non-operated position of the holding relays they are arranged in a circuit which is closed by means of an opto-coupler (32).

13. A device as claimed in one of Claims 8 to 12, characterised in that the commutation field processors (SFP) and the central collective representation processor (BSP) are surrounded by a metallic screen.

**Revendications** .

1. Procédé pour commander, d'une manière protégée contre les erreurs de manipulation, une installation de distribution, constituée par plusieurs panneaux de distribution (1-4), dans un réseau de distribution d'énergie électrique, caractérisé par les phases opératoires suivantes :

a) dans chaque panneau de distribution (1-4), une image numérique (B1-B4) de l'état de fonctionnement du panneau est produite au moyen des signaux de signalisation de position (SME, SMA) de l'interrupteur (6) de chaque panneau, moyennant la simulation d'une manœuvre de commande demandée ;

b) les images numériques (B1-B4) des différents panneaux de distribution (1-4) sont interrogées en permanence de façon successive et cyclique, sont envoyées à une mémoire centrale de collecte et y sont rassemblées pour former une image globale (BS), qui est ensuite à nouveau transmise à chaque panneau de distribution et y est mémorisée jusqu'à l'arrivée de l'image globale immédiatement suivante ;

c) lors de la demande d'une manœuvre de commande (entrée de commande BE), les conditions de verrouillage du dispositif de protection contre les erreurs de manipulation sont contrôlées dans le panneau de distribution considéré, sur la base d'une image globale (BS) arrivant ultérieurement (contrôle de verrouillage) et la manœuvre demandée de commande est exécutée dans le cas d'un résultat négatif (libération).

2. Procédé suivant la revendication 1, caractérisé par le fait que contrairement à la phase opératoire b), seules les variations des images numériques sont transmises successivement et cycliquement entre les panneaux de distribution (1-4) et la mémoire centrale de collecte, et que respectivement la phase opératoire b) est mise en œuvre sans aucun changement pendant des intervalles englobant plusieurs périodes de cycles (TP).

3. Procédé suivant la revendication 1 ou 2, caractérisé par le fait que dans le cas d'une introduction de commande (BE) qui est réalisée avant l'interrogation de l'image individuelle du panneau de distribution, le contrôle de verrouillage est réalisé en fonction de l'image globale (BS) immédiatement suivante, et que dans le cas d'une introduction de commande (BE) réalisée après l'interrogation de l'image individuelle du panneau de distribution, le contrôle de verrouillage est exécuté sur la base de l'image globale (BS) arrivant en seconde position.

4. Procédé suivant l'une des revendications 1 à 3 caractérisé par le fait que lors de la phase opératoire a), un contrôle préalable de verrouillage est exécuté déjà directement après la demande d'une manœuvre de commande dans le panneau de distribution, sur la base de l'image globale reçue précédemment et que dans le cas d'un résultat positif, la simulation de la manœuvre demandée de commande est supprimée.

5. Procédé suivant l'une des revendications 1 à 4, caractérisé par le fait que la transmission des images numériques s'effectue en série dans des lignes de transmission de signaux (D1-D4) d'une largeur de 1 bit et reliant en étoile la mémoire de collecte à tous les panneaux de distribution.

6. Procédé suivant la revendication 5, caractérisé par le fait qu'une transmission de m images de panneaux de distribution dans m lignes de transmission de signaux, possédant une largeur de 1 bit, à m mémoires intermédiaires (S/P) est effectuée simultanément et qu'une retransmission est effectuée, à partir de ces mémoires, dans un bus (14) d'une largeur de n bits, à la mémoire de collecte.

7. Procédé suivant l'une des revendications 1 à 6, caractérisé par le fait qu'avant le déclenchement d'une manœuvre demandée de commande, on réalise un contrôle de continuité du circuit d'actionnement de l'interrupteur, qui est prévu respectivement pour la manœuvre de commande demandée.

8. Dispositif pour la mise en œuvre du procédé suivant l'une des revendications 1 à 7, caractérisé par les caractéristiques suivantes :

a) dans chaque panneau de distribution (1-4) il est prévu un processeur (SFP) du panneau de distribution, qui est relié par l'intermédiaire d'une ligne bidirectionnelle ou de deux lignes unidirectionnelles de transmission de signaux (01-04) à un processeur central (BSP) de collecte des images ;

b) des signaux de signalisation de position (SME, SMA) ainsi que des signaux de demande de manœuvre (BEEE, BEA, BEG) sont envoyés aux processeurs (SFP) des panneaux de distribution ;

c) des commandes de distribution (BAE, BAA), délivrées par des processeurs (SFP) de panneaux de distribution sont combinées logiquement, pour le déclenchement, aux signaux associés de demande de distribution.

9. Dispositif suivant la revendication 8, caractérisé par le fait que les voies de transmission de signaux, qui partent des processeurs et y aboutissent, sont séparées galvaniquement.

10. Dispositif suivant la revendication 9, caractérisé par le fait que les signaux de signalisation de position et les signaux de demande de manœuvre sont envoyés aux processeurs des panneaux de distribution par l'intermédiaire d'optocoupleurs (OK) et des relais de collage (HR) peuvent être actionnés par les signaux de sortie des processeurs des panneaux de distribution.

11. Dispositif suivant la revendication 10, caractérisé par le fait que les bobines de deux relais (FRE, FRA), qui déclenchent des manœuvres opposées de distribution dans un interrupteur, sont reliées par l'une de leurs extrémités, en commun par l'intermédiaire du contact d'un appareil (GT) de sélection des interrupteurs et par l'intermédiaire du contact d'un premier relais de collage (HRF) provoquant le déclenchement, à un pôle d'une source de tension (28) et sont reliées, respectivement au niveau de leur autre extrémité, par l'intermédiaire d'un contact d'un plomb ou d'un troisième relais de collage (FRE, FRA) à l'autre pôle de cette source de tension (28), et qu'un optocoupleur (33) est branché en parallèle, sur son entrée, avec le contact du premier relais de collage (HRF).

12. Dispositif suivant la revendication 10 ou 11, caractérisé par le fait que les contacts de tous les relais de collage sont réalisés sous la forme de contacts alternants et sont disposés dans un circuit fermé par l'intermédiaire d'un optocoupleur (32), lorsque les relais de collage sont à l'état non actionné.

13. Dispositif suivant l'une des revendications 8 à 12, caractérisé par le fait que les processeurs (SFP) des panneaux de distribution et le processeur central de collecte d'images (BSP) sont entourés par un blindage métallique.

FIG 1

FIG 2

FIG 3

FIG 4

FIG 5

FIG 6

FIG 7

FIG 8